# EUROPEAN PATENT APPLICATION

(11) **EP 2 811 784 A1**
(43) Date of publication of application: **10.12.2014**
(21) Application number: 12867326.6
(22) Date of filing: 28.12.2012
(51) Int. Cl.: H04W 36/32, H04W 4/04, H04W 16/10, H04W 16/26, H04W 72/04

(54) **MANAGEMENT SERVER, MOBILE BASE STATION AND WIRELESS COMMUNICATION SYSTEM**

(30) Priority: 30.01.2012 JP 2012016417
(71) Applicant: Panasonic Corporation, Kadoma-shi, Osaka 571-8501 (JP)
(72) Inventor: KOIDE, Yasuo, Osaka, 540-6207 (JP)
(74) Representative: Grünecker, Kinkeldey, Stockmair & Schwanhäusser
(86) International application number: PCT/JP2012/008433
(87) International publication number: WO 2013/114517

(57) **Abstract**

This management server avoids inter-cell interference on mobile terminals even if a relay node (RN) accommodating the mobile terminals has moved. The management server determines the almost blank subframe (ABS) pattern and the application period of the ABS pattern of a macrocell to which an RN is to move to next on the basis of RN location information, speed information and direction of movement transmitted from the RN, and macrocell information that is to be retained, and transmits said information to the RN. On the basis of the information transmitted from the management server, the RN performs scheduling for user equipment (UE) that is undergoing interference.

## Description

### Technical Field

The present invention relates to a management server apparatus, a mobile station apparatus, and a radio communication system used in a relay system of 3GPP (3rd Generation Partnership Project).

### Background Art

In 3GPP Release 10, a relay system is defined for the purpose of newly providing cell coverage and reducing coverage holes in areas where it is difficult to use a wired backhaul link.

In order to support this relay system, an RN (Relay Node) and a DeNB (Donor eNB) are used in E-UTRAN The RN acts like a mobile terminal (hereinafter referred to as "UE: User Equipment") for the DeNB, establishes a radio connection with the DeNB, and is used as a backhaul.

In Release 10, an assumption is made that RNs do not move, and problems with movement of an RN such as inter-cell handover of an RN have not been studied. Accordingly, in Release 11 RAN 3 #73bis, a study on Mobile Relays SI which uses a movable RN has started.

As a main use case of the mobile relay, implementation of the mobile relay in trains has been discussed. The use of mobile relay in trains has the following advantages. By using Group mobility, the amount of signaling required for handover can be reduced. Therefore, it is possible to avoid handover failure due to concurrent handover performed by a large number of UEs with movement of a train. In addition, it is possible to efficiently use radio resources. Further, since the number of radio facilities provided along train tracks can be reduced, system installation cost can be reduced. Furthermore, since transmission power of UEs can be reduced, battery consumption of the UEs can be reduced.

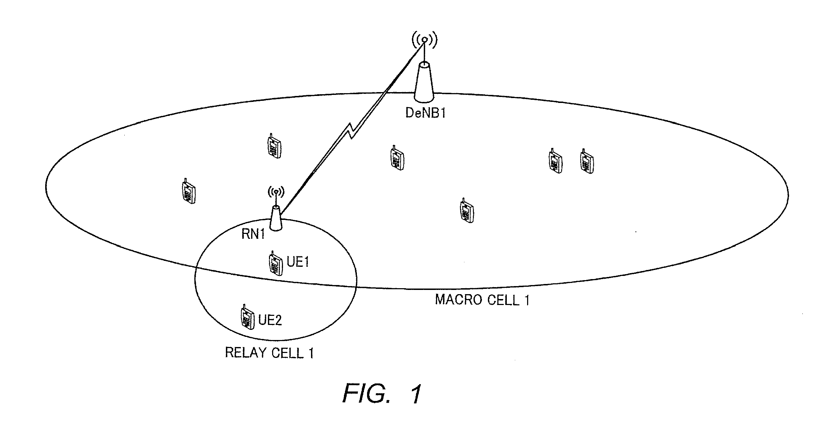

However, when a macro cell and a relay cell of a DeNB are used in an in-bound service in which the same carrier frequency is used, as illustrated in FIG. 1, inter-cell interference occurs in an area where macro cell 1 and relay cell 1 overlap each other. In FIG. 1, UE 1 receives the influence of the inter-cell interference.

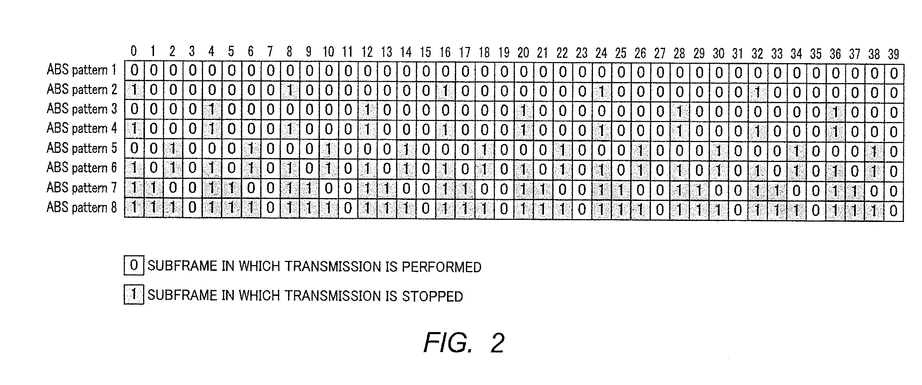

For this reason, as a method to avoid the inter-cell interference, 3GPP defines a system using ABS (Almost Blank Subframe). In FIG. 1, macro cell 1 and relay cell 1 each select an optimum pattern from ABS pattern illustrated in FIG. 2. That is, relay cell 1 can remove interference by scheduling transmission to UE 1 receiving the interference at a transmission stop timing of macro cell 1 which is a cause of the interference. For example, when ABS pattern 4 is used in macro cell 1 and ABS pattern 5 is used in relay cell 1, the interference can be removed by allocating subframes of 0, 4, 8, 12, 16, 20, 24, 28, 32, and 36 to UE1. In FIG. 2, "0" indicates a subframe in which transmission is performed and "1" indicates a subframe in which transmission is stopped.

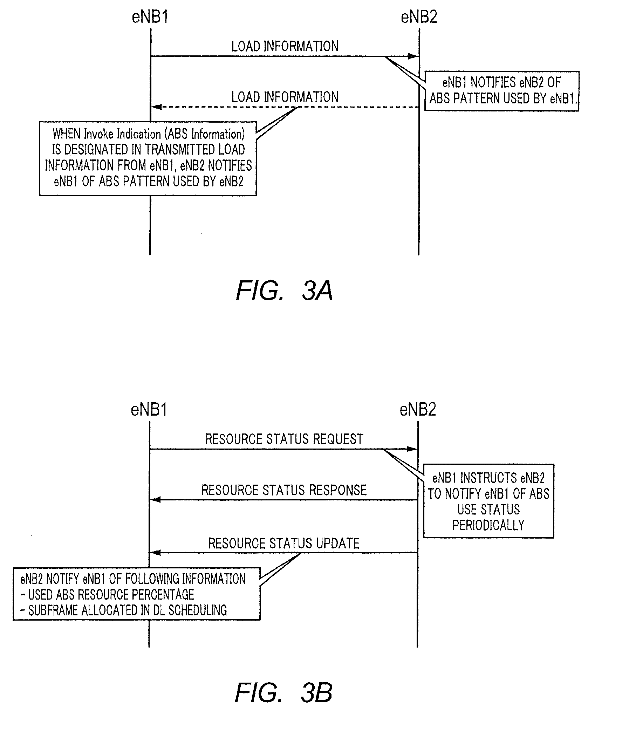

The eNBs connected by X2 connection each notify the other eNB of an ABS pattern and an ABS resource used for each cell using an X2 procedure. Examples of the X2 procedure include a Load Indication procedure (see FIG. 3A) and a Resource Status Reporting Initiation and Resource Status Reporting procedure (see FIG. 3B), as illustrated in FIGS. 3A and 3B.

The eNB can dynamically change the ABS pattern using information obtained by exchanging such X2 messages.

### Citation List

### Non-Patent Literature

NPL 1
   3GPP TS23.401 V10.5.0 "General Packet Radio Service (GPRS) enhancements for Evolved Universal Terrestrial Radio Access Network (E-UTRAN) access (Release 10)"
NPL2
   3GPP TS36.300 V10.5.0 "Evolved Universal Terrestrial Radio Access (E-UTRA) and Evolved Universal Terrestrial Radio Access Network (E-UTRAN); Overall description; Stage 2 (Release 10)"
NPL 3
   3GPP TS36.423 V10.3.0 "Evolved Universal Terrestrial Radio Access Network (E-UTRAN); X2 application protocol (X2AP) (Release 10)"

### Summary of Invention

### Technical Problem

In 3GPP Release 11, in order to improve performance of handover in trains, a study has been carried out on the mobile relay system in which an RN is installed on a train to serve UEs in the train.

In the mobile relay, however, a relay cell constantly moves at a high speed, so that the interference target cell changes, and the interference state in the relay cell frequently changes. For this reason, the X2 base interference control using ABS pattern notification described above cannot support the mobile relay.

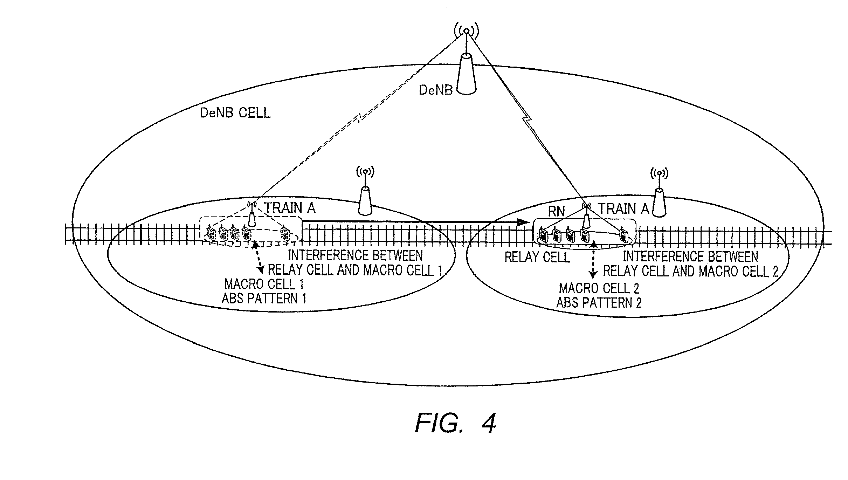

This case will be described specifically with reference to FIG. 4. In FIG 4, train A on which an RN is mounted moves from macro cell 1 to macro cell 2 using different ABS patterns, respectively. At this time, the relay cell cannot acquire the ABS pattern of macro cell 2 in an X2 base. Therefore, when scheduling is performed based on the ABS pattern of macro cell 1 even after the movement to macro cell 2, there is a problem in that interfered UEs cannot be scheduled correctly, and cannot avoid interference.

An object of the present invention is to provide a management server apparatus, a mobile base station apparatus, and a radio communication system that avoid inter-cell interference to mobile terminals even when a relay node serving the mobile terminals moves.

### Solution to Problem

A management server apparatus according to an aspect of the present invention includes: a reception section that receives position information, speed information and a moving direction on a mobile base station that are transmitted from the mobile base station; a management section that manages cell placement information of a fixed base station apparatus, and a transmission and non-transmission pattern used in a cell of the fixed base station apparatus; a determination section that determines a moving destination cell, to which the mobile base station apparatus moves next, using the received position information, speed information, and moving direction, and the cell placement information under management; and a transmission section that transmits the transmission and non-transmission pattern used in the determined moving destination cell to the mobile base station apparatus.

A mobile base station apparatus according to an aspect of the present invention includes: a reception section that receives a transmission and non-transmission pattern used in a moving destination cell, to which the mobile base station apparatus moves next; and a scheduling section that performs scheduling for a mobile terminal apparatus served by the mobile base station apparatus, based on the received transmission and non-transmission pattern.

A radio communication system according to an aspect of the present invention includes: a management server apparatus; and a mobile base station apparatus, in which the management server apparatus includes: a reception section that receives position information, speed information, and a moving direction of a mobile base station apparatus that are transmitted from the mobile base station apparatus; a management section that manages cell placement information of a fixed base station apparatus, and a transmission and non-transmission pattern used in a cell of the fixed base station apparatus; a determination section that determines a moving destination cell, to which the mobile base station apparatus moves next, using the received position information, speed information, and moving direction, and the cell placement information under management; and a transmission section that transmits the transmission and non-transmission pattern used in the determined moving destination cell to the mobile base station apparatus, and the mobile base station apparatus includes: a reception section that receives the transmission and non-transmission pattern transmitted from the management server apparatus; and a scheduling section that performs scheduling for a mobile terminal apparatus served by the mobile base station apparatus, based on the received transmission and non-transmission pattern.

### Advantageous Effects of Invention

According to the present invention, it is made possible to avoid inter-cell interference to mobile terminals even when a relay node serving the mobile terminals moves.

### Brief Description of Drawings

FIG. 1 is a diagram illustrating a case in which inter-cell interference occurs between a macro cell and a relay cell;
FIG. 2 is a diagram illustrating ABS patterns;
FIGS. 3A and 3B are diagrams illustrating X2 procedures;
FIG. 4 is a diagram illustrating a case in which an interference state in a relay cell frequently changes;
FIG. 5 is a block diagram illustrating a configuration of an RN according to an embodiment of the present invention;
FIG. 6 is a block diagram illustrating a configuration of a management server according to an embodiment of the present invention;
FIG. 7 is a flowchart illustrating a determination processing procedure of a macro cell movement determination section of the management server illustrated in FIG. 6; and
FIG. 8 is a schematic diagram illustrating a signal transmission procedure in a communication system including an RN and a management server.

### Description of Embodiments

Hereinafter, an embodiment of the present invention will be described in detail with reference to the accompanying drawings.

### (Embodiment)

In this embodiment, a case will be described in which an RN as a mobile base station apparatus mounted on a train communicates with a management server retaining information of a macro cell formed by an eNB which is a fixed base station apparatus.

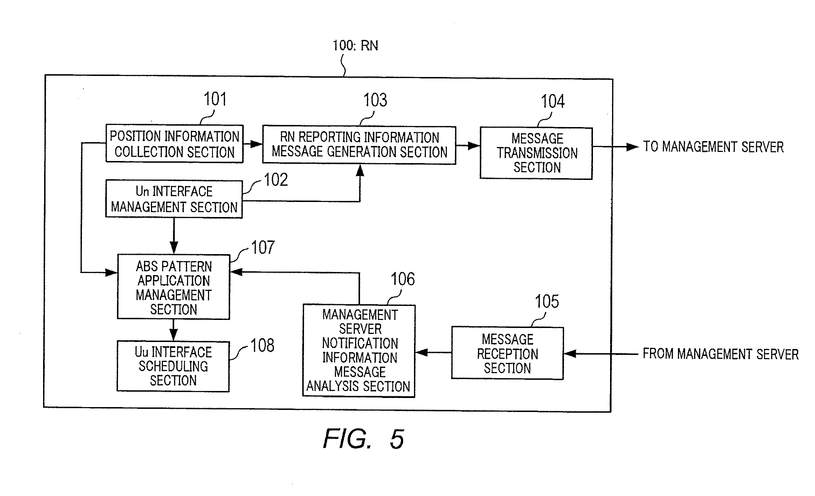

FIG. 5 is a block diagram illustrating a configuration of RN 100 according to an embodiment of the present invention. Hereinafter, the configuration of RN 100 will be described with reference to FIG. 5.

Position information collection section 101 acquires position information, speed information, and moving direction information on RN 100 from a GPS (Global Positioning System) or a railroad management system and outputs the acquired information to RN reporting information message generation section 103. Position information collection section 101 outputs the position information on RN 100 to ABS pattern application management section 107.

Un interface management section 102 acquires an identifier of a macro cell in which RN 100 is located from broadcast information and outputs the acquired identifier to RN reporting information message generation section 103 and ABS pattern application management section 107.

RN reporting information message generation section 103 generates an RN reporting information message including information output from position information collection section 101 and Un interface management section 102 and outputs the generated message to message transmission section 104.

Message transmission section 104 transmits the message output from RN reporting information message generation section 103 to a management server.

Message reception section 105 forwards a message received from the management server to management server notification information message analysis section 106.

Management server notification information message analysis section 106 analyzes the message forwarded from the message reception section 105, acquires information on an identifier of a macro cell to which RN 100 moves next, the ABS pattern of the macro cell, and an application period of the ABS pattern, and outputs the acquired information to ABS pattern application management section 107.

ABS pattern application management section 107 changes a scheduling pattern based on the information notified by management server notification information message analysis section 106. The information notified by management server notification information message analysis section 106 is information that includes the information on the identifier of the macro cell to which RN 100 moves next, the ABS pattern of the macro cell, and the application period of the ABS pattern. Then, ABS pattern application management section 107 outputs the changed scheduling pattern to Uu interface scheduling section 108.

Here, when the application period of the ABS pattern is determined according to the position of the train, ABS pattern application management section 107 notifies Uu interface scheduling section 108 of a scheduling pattern at a timing when a cell boundary position designated by the management server matches the position information on the RN output from position information collection section 101.

When the application period of the ABS pattern is determined based on a cell boundary passage time of the train, ABS pattern application management section 107 notifies Uu interface scheduling section 108 of the scheduling pattern at a clock time of an application start timing and a clock time of an application end timing designated by the management server.

When the application period of the ABS pattern is determined based on the broadcast information, the following operation is performed. That is, when the identifier of the macro cell included in the broadcast information matches the identifier of the macro cell designated by the management server, ABS pattern application management section 107 finds a scheduling pattern based on the ABS pattern designated by the management server with the identifier of the macro cell. The broadcast information is information notified by Un interface management section 102. ABS pattern application management section 107 notifies Uu interface scheduling section 108 of the found scheduling pattern.

Uu interface scheduling section 108 performs scheduling of interfered UEs based on the scheduling pattern notified by ABS pattern application management section 107.

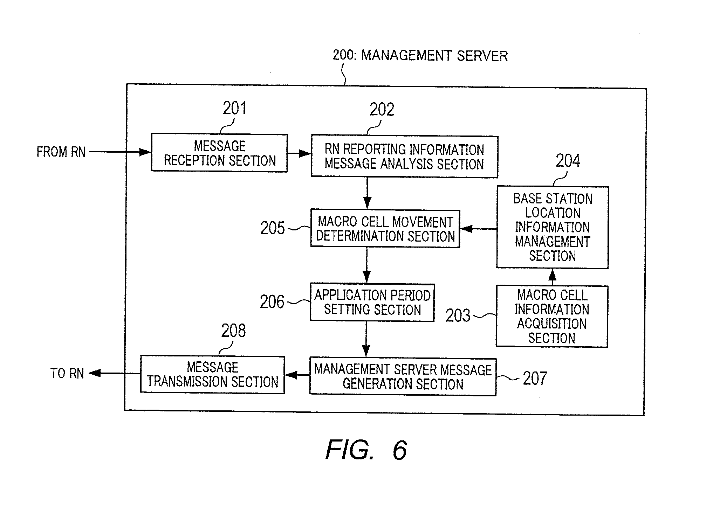

FIG. 6 is a block diagram illustrating a configuration of management server 200 according to an embodiment of the present invention. Hereinafter, the configuration of management server 200 will be described with reference to FIG. 6.

Message reception section 201 receives a message transmitted from RN 100 and transmits the received message to RN reporting information message analysis section 202.

RN reporting information message analysis section 202 analyzes the RN reporting information message transmitted from message reception section 201, acquires the identifier of the macro cell of the area where RN 100 is located, and the position information, the speed information, and the moving direction on the RN, and outputs the acquired information to macro cell movement determination section 205.

Macro cell information acquisition section 203 collects change information regarding the macro cell by an SON (Self Organizing Network) and Energy Saving or the like and outputs the collected change information regarding the macro cell to base station location information management section 204.

Base station location information management section 204 manages information on a macro cell present along a train track, such as an identifier of the cell, a cell boundary in an inbound direction of the train track, a cell boundary in an outbound direction of the train track, and the ABS pattern used in the macro cell, using a table. The table is managed so that cell locations are sorted in order from the inbound train track to the outbound train track. Base station location information management section 204 notifies macro cell movement determination section 205 of the table information upon request from macro cell movement determination section 205. When base station location information management section 204 acquires the change information of the macro cell from macro cell information acquisition section 203, base station location information management section 204 changes the corresponding information in the table.

Macro cell movement determination section 205 obtains a distance up to the cell boundary of the next moving destination macro cell located on the route of RN 100 based on the information output from RN reporting information message analysis section 202 and the information such as the identifier of the macro cell, and the cell boundary in the inbound direction and the cell boundary in the outbound direction of the train track of this cell acquired from base station location information management section 204. Macro cell movement determination section 205 compares the obtained distance to a predetermined threshold to determine whether RN 100 moves to another macro cell. When determining that the RN 100 moves to the other macro cell, macro cell movement determination section 205 notifies application period setting section 206 that RN 100 moves to the other macro cell. The details of macro cell movement determination section 205 will be described below.

Application period setting section 206 determines the application period of the ABS pattern of the moving destination macro cell that is to be applied in RN 100, based on the notification from macro cell movement determination section 205 and outputs determined application period to management sever message generation section 207.

Here, when an application timing of the ABS pattern is set based on the position of the train, application period setting section 206 outputs the locations of the cell boundary in the inbound direction and the cell boundary in the outbound direction of the moving destination macro cell to management sever message generation section 207.

Some moving routes of the train include many tunnels, so that it may be difficult to acquire the position information because of interrupted GPS reception. For this reason, a method of setting an application period at clock times as application timings of the ABS patterns is used this case. A railroad management system that manages operation information of train also manages the passage times of specific points for each train, i.e., cell boundaries of a predetermined macro cell in this case. Application period setting section 206 obtains an arrival time to a cell boundary of the moving destination macro cell of RN 100 and a departure time from the cell boundary from the railroad management system via a signal line (not illustrated) and sets the arrival time and the departure time as the application start timing and the application end timing, respectively. Then, application period setting section 206 outputs the application start timing and the application end timing to management sever message generation section 207.

For example, when the boundary of a moving destination cell frequently changes by an SON function, a method that sets a broadcast information reception time of a macro cell as the application start timing is used. Application period setting section 206 outputs an identifier of a moving destination macro cell and an ABS pattern of the macro cell to management sever message generation section 207.

Management sever message generation section 207 generates a management server message including the information output from application period setting section 206 and outputs the generated message to message transmission section 208.

Message transmission section 208 transmits the management server message output from management sever message generation section 207 to RN 100.

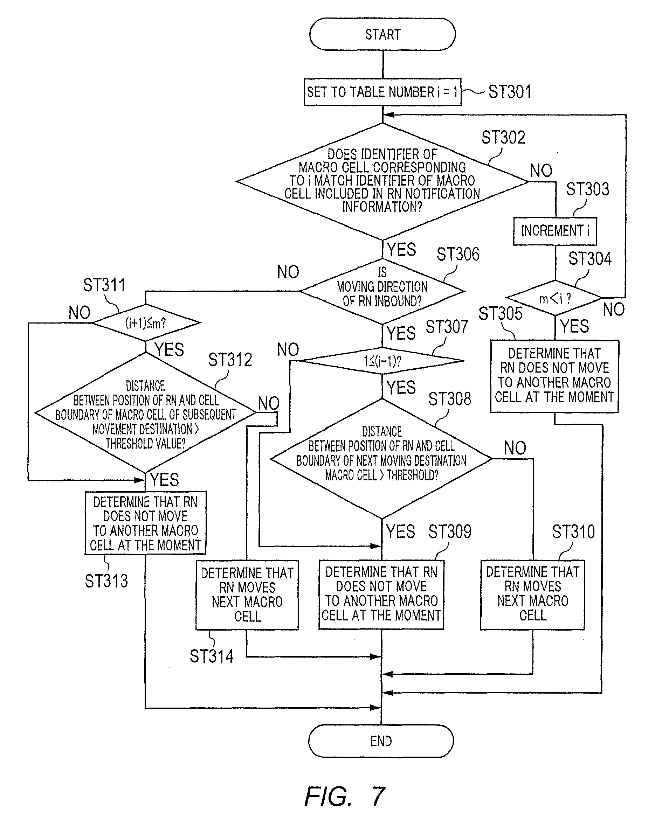

Next, a determination process of macro cell movement determination section 205 of management server 200 illustrated in FIG. 6 will be described with reference to FIG. 7. In FIG. 7, the table number is indicated by i and is set to "i" = "1" in a step (hereinafter abbreviated to "ST") 301.

In ST 302, it is determined whether the identifier of the macro cell corresponding to i matches the identifier of the macro cell included in the RN reporting information. When the identifiers match each other (YES), the process proceeds to ST 306. When the identifiers do not match each other (NO), the process proceeds to ST 303.

In ST 303, "i" is incremented. In ST 304, it is determined whether "i" is greater than the maximum value m of the table number. When "i" is greater than m, the process proceeds to ST 305. When "i" is equal to or less than m, the process returns to ST 302.

In ST 305, it is determined that RN 100 does not move to another macro cell at the moment, and then the determination process ends.

In ST 306, it is determined whether the moving direction of RN 100 is inbound. When the moving direction is inbound (YES), the process proceeds to ST 307. When the moving direction is outbound (NO), the process proceeds to ST 311.

In ST 307, it is determined whether ("i" - 1) is equal to or greater than 1. In this step, whether a next moving destination macro cell of RN 100 is present. When ("i" - 1) is equal to or greater than 1 (YES), the process proceeds to ST 308. When ("i" - 1) is less than 1 (NO), the process proceeds to ST 309.

In ST 308, it is determined whether a distance between the position of RN 100 and the cell boundary of the next moving destination macro cell located on the route of RN 100 exceeds a threshold. When the distance exceeds the threshold (YES), the process proceeds to ST 309. When the distance is equal to or less than the threshold (NO), the process proceeds to ST 310.

In ST 309, it is determined that RN 100 does not move to another macro cell at the moment, and then the determination process ends. In ST 310, it is determined that RN 100 moves to the other macro cell, and then the determination process ends.

In ST 311, it is determined whether ("i" + 1) is equal to or less than the maximum value m of the table number. Here, it is determined whether there is a next moving destination macro cell of RN 100. When ("i" + 1) is equal to or less than m (YES), the process proceeds to ST 312. When ("i" + 1) is greater than m (NO), the process proceeds to ST 313.

In ST 312, it is determined whether a distance between the position of RN 100 and the cell boundary of the next moving destination macro cell located on the route of RN 100 exceeds a threshold. When the distance exceeds the threshold (YES), the process proceeds to ST 313. When the distance is equal to or less than the threshold (NO), the process proceeds to ST 314.

In ST 313, it is determined that RN 100 does not move to another macro cell at the moment, and then the determination process ends. In ST 314, it is determined that RN 100 moves to the other macro cell, and then the determination process ends.

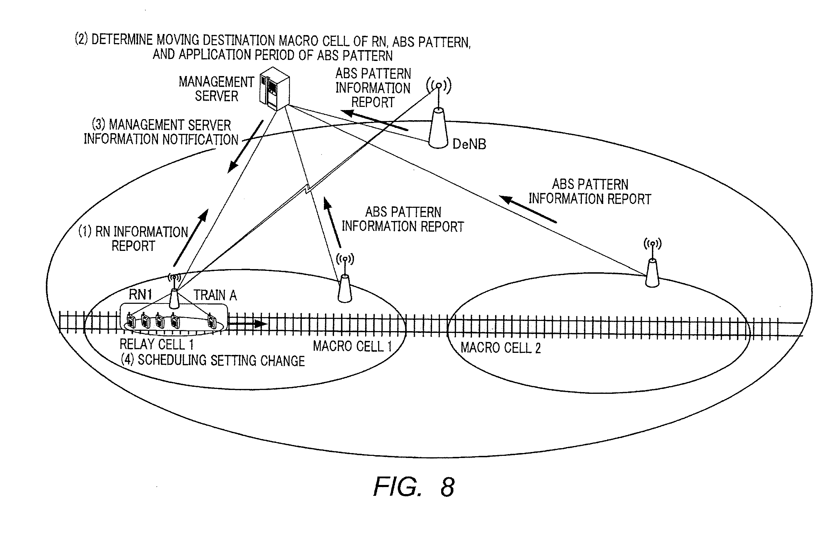

Next, a signal transmission procedure in a communication system including RN 100 and management server 200 mentioned above will be described with reference to FIG. 8. In FIG. 8, management server 200 acquires the ABS pattern used in each cell from the DeNB and the eNB. Here, the train on which RN 100 is mounted is assumed to move from macro cell 1 to macro cell 2.

In (1), RN 100 collects the position information on RN 100, the speed information on RN 100, the moving direction of RN 100, and the identifier of macro cell 1 and transmits RN reporting information including these piece of information to management server 200.

In (2), management server 200 determines whether RN 100 moves from a macro cell to another macro cell, using the information transmitted from RN 100, the retained macro cell information, and the information acquired from the eNB. When RN 100 moves from the macro cell to the other macro cell, management server 200 determines the ABS pattern of the moving destination macro cell, and the application period of the ABS pattern.

In (3), management server 200 transmits the ABS pattern of the moving destination macro cell and the application period of the ABS pattern to RN 100. In (4), RN 100 changes the scheduling pattern for the interfered UEs based on the ABS pattern of the moving destination macro cell and the application period of the ABS pattern transmitted from management server 200.

In this way, according to the embodiment, the management server determines the ABS pattern of the macro cell to which the RN moves next and the application period of the AB pattern based on the retained macro cell information and the position information, the speed information, and the moving direction of the RN notified by the RN, and notifies the RN of the determined information, and the RN performs scheduling for the interfered UEs based on the information. Accordingly, even when an RN moves, it is possible to avoid inter-cell interference to the UEs served by the RN.

The disclosure of Japanese Patent Application No. 2012-016417, filed on January 30, 2012, including the specification, drawings and abstract, is incorporated herein by reference in its entirety.

### Industrial Applicability

A management server apparatus, a mobile base station apparatus, and a radio communication system according to the present invention are suitable for avoiding inter-cell interference to the UEs served by an RN even when the RN moves.

### Reference Signs List

- 100: RN
- 101: Position information collection section
- 102: Un interface management section
- 103: RN reporting information message generation section
- 104, 208: Message transmission section
- 105, 201: Message reception section
- 106: Management server notification information message analysis section
- 107: ABS pattern application management section
- 108: Uu interface scheduling section
- 200: Management server
- 202: RN notification information message analysis section
- 203: Macro cell information acquisition section
- 204: Station location information management section
- 205: Macro cell movement determination section
- 206: Application period setting section
- 207: Management sever message generation section

## Claims

1. A management server apparatus comprising:
a reception section that receives position information, speed information and a moving direction on a mobile base station that are transmitted from the mobile base station;
a management section that manages cell placement information of a fixed base station apparatus, and a transmission and non-transmission pattern used in a cell of the fixed base station apparatus;
a determination section that determines a moving destination cell, to which the mobile base station apparatus moves next, using the received position information, speed information, and moving direction, and the cell placement information under management; and
a transmission section that transmits the transmission and non-transmission pattern used in the determined moving destination cell to the mobile base station apparatus.

2. The management server apparatus according to claim 1, wherein the determination section determines whether the mobile base station apparatus moves to the moving destination cell, based on a distance between a position of the mobile base station apparatus and a cell boundary of the moving destination cell located on a route of the mobile base station apparatus.

3. The management server apparatus according to claim 1, further comprising
an application period setting section that sets cell boundary information of the moving destination cell as an application period of the transmission and non-transmission pattern used in the moving destination cell, wherein
the transmission section transmits the set application period to the mobile base station apparatus.

4. The management server apparatus according to claim 1, further comprising
an application period setting section that sets an arrival time to a first cell boundary of the moving destination cell and a departure time from a second cell boundary thereof as an application period of the transmission and non-transmission pattern used in the moving destination cell, the arrival time and departure time being acquired from a railroad management system that manages operation information of a train, wherein
the transmission section transmits the set application period to the mobile base station apparatus.

5. The management server apparatus according to claim 1, further comprising
an application period setting section that sets a reception time of broadcast information broadcasted from the fixed base station apparatus, to be an application start timing as an application period of the transmission and non-transmission pattern used in the moving destination cell, wherein
the transmission section transmits the set application period to the mobile base station apparatus.

6. The management server apparatus according to claim 1, wherein the management section manages position information on a cell boundary located on a route of the mobile base station apparatus as the cell placement information on the fixed base station apparatus.

7. The management server apparatus according to claim 1, wherein the management section manages, in a table, the cell placement information on the fixed base station apparatus in a moving order of the mobile base station apparatus.

8. The management server apparatus according to claim 1, wherein the management section acquires changed cell placement information from the fixed base station apparatus and changes the cell placement information under management to the changed cell placement information.

9. A mobile base station apparatus comprising:
a reception section that receives a transmission and non-transmission pattern used in a moving destination cell, to which the mobile base station apparatus moves next; and
a scheduling section that performs scheduling for a mobile terminal apparatus served by the mobile base station apparatus, based on the received transmission and non-transmission pattern.

10. The mobile base station apparatus according to claim 9, further comprising
an application management section that sets cell boundary information of the moving destination cell as an application period of the transmission and non-transmission pattern of the moving destination cell, the cell boundary information being designated by a management server apparatus.

11. The mobile base station apparatus according to claim 9, further comprising
an application management section that sets an arrival time to a first cell boundary of the moving destination cell and a departure time from a second cell boundary thereof as an application period of the transmission and non-transmission pattern of the moving destination cell, the arrival time and departure time being designated by a management server apparatus.

12. The mobile base station apparatus according to claim 9, further comprising
an application management section that sets a timing at which an identifier of a cell designated by a management server apparatus matches an identifier of a cell included in broadcast information, as an application period start timing of the transmission and non-transmission pattern of the moving destination cell.

13. A radio communication system comprising:
a management server apparatus; and
a mobile base station apparatus, wherein
the management server apparatus comprises:
a reception section that receives position information, speed information, and a moving direction of a mobile base station apparatus that are transmitted from the mobile base station apparatus;
a management section that manages cell placement information of a fixed base station apparatus, and a transmission and non-transmission pattern used in a cell of the fixed base station apparatus;
a determination section that determines a moving destination cell, to which the mobile base station apparatus moves next, using the received position information, speed information, and moving direction, and the cell placement information under management; and
a transmission section that transmits the transmission and non-transmission pattern used in the determined moving destination cell to the mobile base station apparatus, and
the mobile base station apparatus comprises:
a reception section that receives the transmission and non-transmission pattern transmitted from the management server apparatus; and
a scheduling section that performs scheduling for a mobile terminal apparatus served by the mobile base station apparatus, based on the received transmission and non-transmission pattern.
